(19) Europäisches Patentamt
European Patent Office
Office européen des brevets

(11) **EP 4 765 853 A1**

(12) **EUROPEAN PATENT APPLICATION**

(43) Date of publication:
24.06.2026 Bulletin 2026/26

(21) Application number: 25224886.9

(22) Date of filing: 18.12.2025

(51) International Patent Classification (IPC):
*H04N 25/534* (2023.01)  *H04N 25/773* (2023.01)
*H04N 23/745* (2023.01)

(52) Cooperative Patent Classification (CPC):
H04N 25/534; H04N 23/745; H04N 25/773

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.12.2024 JP 2024225143

(71) Applicant: Canon Kabushiki Kaisha
Tokyo, 146-8501 (JP)

(72) Inventor: NUMATA, Aihiko
Tokyo, 146-8501 (JP)

(74) Representative: TBK
Bavariaring 4-6
80336 München (DE)

(54) **CONVERSION DEVICE, CONVERSION METHOD, AND STORAGE MEDIUM**

(57)    A conversion device includes a photodiode and a counter configured to count and output the number of output signals from the photodiodes until the number of output signals reaches a count number. By controlling an exposure time of the photodiode and a recharge period of the photodiode, a first pixel in which a ratio of the count number to a maximum recharge number determined as a quotient obtained by dividing the exposure time by the recharge period is a first ratio and a second pixel in which the ratio of the count number to the maximum recharge number is a second ratio smaller than the first ratio are set.

FIG. 6

EP 4 765 853 A1

**Description**

TECHNICAL FIELD

The aspect of the embodiments relates to a conversion device, a conversion method, and a storage medium.

BACKGROUND

In recent years, a photoelectric converter that digitally counts the number of photons arriving at an avalanche photodiode (APD) and outputs the counted value as a photoelectrically converted digital signal from a pixel has been proposed.

In Japanese Unexamined Patent Publication No. 2020-123847, a photoelectric conversion device that can appropriately detect the number of periods in which avalanche multiplication has occurred by controlling a recharge timing of an APD using a pulse signal is described.

In the photoelectric conversion device described in Japanese Unexamined Patent Publication No. 2020-123847, photons can be individually counted for each period of a pulse generated by a pulse generation circuit. When this technique is used and a plurality of photons are incident in one period of a pulse, a count loss occurs.

Here, when general stationary light is imaged, it is possible to reduce an influence of a count loss through a correction process by statistically predicting the number of photons which are incident in one period of a pulse.

On the other hand, in an environment in which a light source flickering in one frame, particularly, an LED light source using a drive method based on a pulse modulation system is used as an illumination or when a light source moving in one frame or the like is used, more count losses occur than when stationary light is used. Accordingly, accuracy of a count loss correcting process decreases, and color tones in an actual environment change.

SUMMARY

According to an aspect of the embodiments, there is provided a conversion device including: a photodiode; a counter configured to count and output a number of output signals from the photodiodes until the number of output signals reaches a count number; at least one processor; and a memory coupled to the at least one processor, the memory storing instructions that, when executed by the at least one processor, cause the at least one processor to perform: controlling an exposure time of the photodiode and a recharge period of the photodiode such that a first pixel in which a ratio of the count number to a maximum recharge number determined as a quotient obtained by dividing the exposure time by the recharge period is a first ratio and a second pixel in which the ratio of the count number to the maximum recharge number is a second ratio smaller than the first ratio are set.

Further features of the disclosure will become apparent from the following description of embodiments with reference to the attached drawings.

BRIEF DESCRIPTION OF THE DRAWINGS

FIG. 1 is a diagram illustrating an example of a configuration of a photoelectric converter 100 according to a first embodiment of the disclosure.
FIG. 2 is a diagram illustrating an example of a configuration of a sensor board 11 according to the first embodiment.
FIG. 3 is a diagram illustrating an example of a configuration of a circuit board 21 according to the first embodiment.
FIG. 4 is a diagram illustrating an example of an equivalent circuit of a pixel 101 and a signal processing circuit 103 corresponding to the pixel 101 according to the first embodiment.
FIG. 5 is a timing chart of the photoelectric converter according to the first embodiment.
FIG. 6 is a diagram illustrating an example of pixel arrangement of first pixels 101a and second pixels 101b of the photoelectric converter 100 according to the first embodiment.
FIG. 7A is a diagram illustrating a count operation when stationary light is used as illumination.
FIG. 7B is a diagram illustrating a count operation when a light source flickering with time is used as an illumination.
FIG. 7C is a diagram illustrating an illumination intensity of a region of interest when there is a light source moving in one frame.
FIG. 8A is a diagram illustrating an example in which a second ratio obtained by dividing a saturation-determination count number by a maximum recharge number is made to be less than a first ratio by decreasing the saturation-determination count number.
FIG. 8B is a diagram illustrating an example in which the second ratio obtained by dividing the saturation-determination count number by the maximum recharge number is made to be less than the first ratio by decreasing a recharge period.

FIG. 8C is a diagram illustrating an example in which the second ratio obtained by dividing the saturation-determination count number by the maximum recharge number is made to be less than the first ratio by increasing an exposure time.

FIGS. 9A and 9B are diagrams illustrating response characteristics of first pixels and second pixels.

FIG. 10A is a diagram illustrating an example of response characteristics of first pixels and FIG. 10B is a diagram illustrating an example of response characteristics of second pixels.

FIG. 11A is a diagram illustrating an example in which positions of first pixels and second pixels are switched for each frame.

FIG. 11B is a diagram illustrating an example in which a drive condition different from that in a large number of other pixels is used in a small number of pixels.

FIG. 12 is a functional block diagram illustrating an example of a configuration of a photoelectric conversion device employing the photoelectric converter according to the first to fourth embodiments.

DESCRIPTION OF THE EMBODIMENTS

Hereinafter, with reference to the accompanying drawings, favorable modes of the disclosure will be described using Embodiments. In each diagram, the same reference signs are applied to the same members or elements, and duplicate description will be omitted or simplified.

<First embodiment>

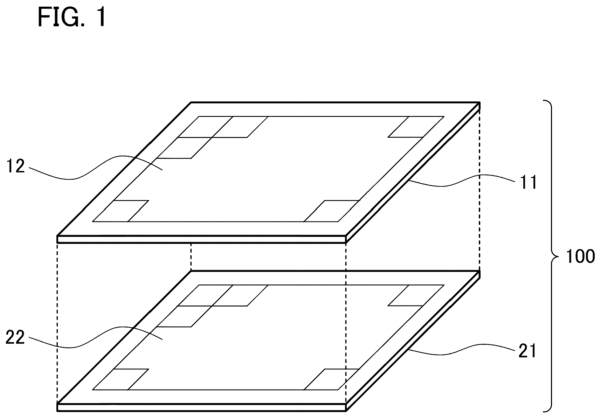

FIG. 1 is a diagram illustrating an example of a configuration of a photoelectric converter 100 according to a first embodiment of the disclosure. A sensor board 11 includes a pixel area 12, and a circuit board 21 includes a circuit area 22 that processes signals detected in the pixel area 12.

In the embodiment, an example of a photoelectric conversion device with a so-called stacked structure in which the photoelectric converter 100 is configured by stacking two boards including the sensor board 11 and the circuit board 21 and electrically connecting the two boards will be described. However, a non-stacked structure in which elements included in the sensor board and elements included in the circuit board are provided in a common semiconductor layer may be employed.

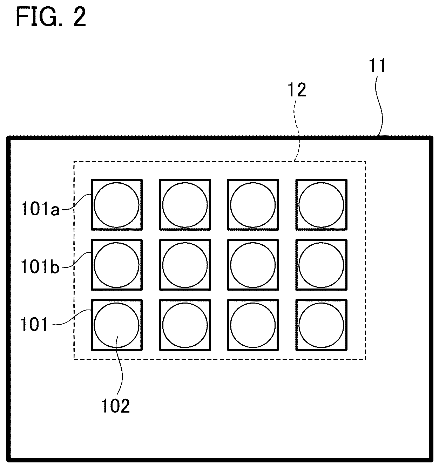

FIG. 2 is a diagram illustrating an example of a configuration of the sensor board 11 according to the first embodiment. The pixel area 12 of the sensor board 11 includes a plurality of pixels 101 which are arranged two-dimensionally in directions of a plurality of rows and a plurality of columns. Each pixel 101 includes a photoelectric conversion element 102 including an avalanche photodiode (hereinafter referred to as APD).

As will be described later, the photoelectric converter 100 according to the embodiment includes a plurality of first pixels 101a and a plurality of second pixels 101b. For example, the number of first pixels 101a and the number of second pixels 101b may be substantially set to the same. The number of rows and the number of columns of a pixel array constituting the pixel area 12 are not particularly limited.

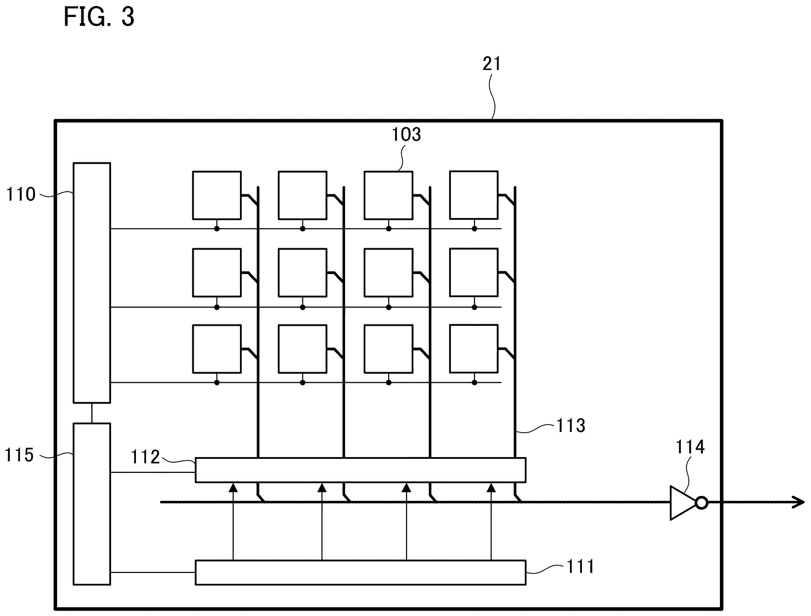

FIG. 3 is a diagram illustrating an example of a configuration of the circuit board 21 according to the first embodiment. The circuit board 21 includes a signal processing circuit 103 for processing electric charge photoelectrically converted by the corresponding photoelectric conversion element 102 in FIG. 2, a reading circuit 112, a control pulse generator 115, a horizontal scanning circuit 111, a signal line 113, and a vertical scanning circuit 110.

The vertical scanning circuit 110 receives a control pulse supplied from the control pulse generator 115 and sequentially supplies the control pulse to the pixels. A logic circuit such as a shift register or an address decoder is used for the vertical scanning circuit 110.

A signal output from the photoelectric conversion element 102 of each pixel is processed by the corresponding signal processing circuit 103. The signal processing circuit 103 is provided with a counter, a memory, or the like, and a digital value is stored in the memory. The horizontal scanning circuit 111 inputs a control pulse for sequentially selecting a column to the signal processing circuits 103 to read signals from the memories of the pixels storing a digital signal.

Signals from the signal processing circuits 103 of the pixels selected by the vertical scanning circuit 110 are output to the signal line 113 for the selected column. The signals output to the signal line 113 are output to the outside of the photoelectric converter 100 via an output circuit 114.

As illustrated in FIGS. 2 and 3, a plurality of signal processing circuits 103 are arranged in an area overlapping the pixel area 12 in a plan view. The vertical scanning circuit 110, the horizontal scanning circuit 111, the reading circuit 112, the output circuit 114, and the control pulse generator 115 are arranged to overlap between an end of the sensor board 11 and an end of the pixel area 12 in a plan view.

In other words, the sensor board 11 includes the pixel area 12 and a non-pixel area disposed around the pixel area 12. The vertical scanning circuit 110, the horizontal scanning circuit 111, the reading circuit 112, the output circuit 114, and the control pulse generator 115 are arranged in an area overlapping the non-pixel area in a plan view.

Arrangement of the signal lines 113 and arrangement of the reading circuit 112 and the output circuit 114 are not limited to the example illustrated in FIG. 3. For example, the signal lines 113 may be disposed to extend in the row direction, and the reading circuit 112 may be disposed forward in the extending direction of the signal lines 113.

The function of the signal processing circuit 103 does not have to be provided for each photoelectric conversion element, but a configuration in which one signal processing unit is shared by a plurality of photoelectric conversion elements and performs sequential signal processing thereon may be employed.

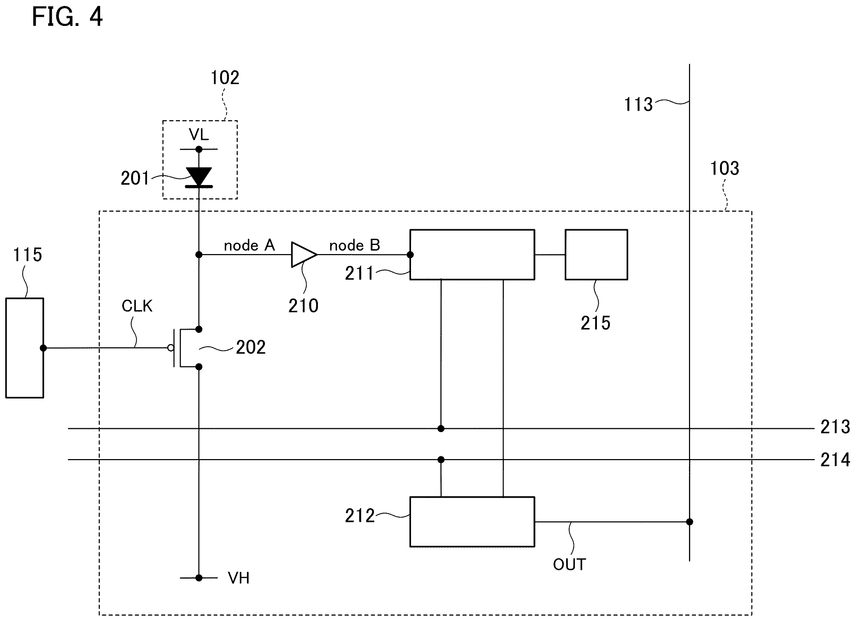

FIG. 4 is a diagram illustrating an example of an equivalent circuit of a pixel 101 and a signal processing circuit 103 corresponding to the pixel 101 according to the first embodiment.

The APD 201 generates electric charge pairs corresponding to incident light through photoelectric conversion. One node of two nodes of the APD 201 is connected to a power supply line for supplying a drive voltage VL (a first voltage).

The other node of the two nodes of the APD 201 can be connected to a power supply line for supplying a drive voltage VH (a second voltage) which is higher than the voltage VL via a switch 202. In FIG. 4, the one node of the APD 201 is an anode, and the other node of the APD is a cathode.

The anode and the cathode of the APD 201 are supplied with a reverse bias voltage for allowing the APD 201 to perform an avalanche multiplication operation. By supplying this reverse bias voltage, electric charge generated by incident light causes avalanche multiplication, and an avalanche current is generated.

When the reverse bias voltage is supplied, there are a Geiger mode in which a voltage difference between the anode and the cathode is greater than a breakdown voltage and a linear mode in which the voltage difference between the anode and the cathode is a voltage difference close to the breakdown voltage or equal to or less than the breakdown voltage. The APD that operates in the Geiger mode is referred to as an SPAD. In the SPAD, for example, the voltage VL (the first voltage) is -30 V and the voltage VH (the second voltage) is 1 V.

The switch 202 is connected to the power supply line for supplying the drive voltage VH and one of the anode and the cathode of the APD 201. The switch 202 switches a resistance value between the APD 201 and the power supply line for supplying the drive voltage VH.

That is, the switch 202 is connected to one of an anode and a cathode of an avalanche photodiode and a power supply line for supplying a drive voltage and switches a resistance value between the one node and the power supply line.

Here, in one embodiment, switching of a resistance value means that the resistance value is changed by 10 times or more. In another embodiment, means that the resistance value is changed by 100 times or more. In the following description, decreasing of the resistance value is also referred to as turning-on of the switch 202, increasing of the resistance value is also referred to as turning-off of the switch 202.

The switch 202 serves as a quench element. That is, the switch 202 serves as a load circuit (a quench circuit) at the time of multiplication of a signal through avalanche multiplication and performs a quench operation of curbing a voltage supplied to the APD 201 to curb the avalanche multiplication.

The switch 202 also performs a recharge operation of returning the voltage supplied to the APD 201 to the drive voltage VH by causing a current corresponding to a voltage drop due to the quench operation to flow therein. The switch 202 may be constituted by a MOS transistor, and an example in which the switch 202 is a PMOS transistor is illustrated in FIG. 4.

A control signal CLK for controlling the switch 202 is supplied to the gate electrode of the MOS transistor constituting the switch 202 from the control pulse generator 115 which is a signal generator.

The control pulse generator 115 controls a recharge period of the avalanche photodiode by controlling a voltage applied to the gate electrode of the switch 202 to control turning-on/off of the switch 202. An exposure time (a count time) of the avalanche photodiode is controlled using a control unit 801 which is an exposure time controller which will be described later.

The signal processing circuit 103 includes a waveform shaper 210, a counter circuit 211, and a selection circuit 212. In one embodiment, the signal processing circuit 103 has only to include at least one of the waveform shaper 210, the counter circuit 211, and the selection circuit 212.

The waveform shaper 210 shapes a voltage change of the cathode of the APD 201 which is acquired at the time of detection of photons and outputs a pulse signal. For example, an inverter circuit is used as the waveform shaper 210. As the inverter circuit, a circuit in which a plurality of inverters are connected in series may be used or another circuit with a waveform shaping effect may be used.

The counter circuit 211 counts the number of pulse signals output from the waveform shaper 210 and stores a count value. When a control pulse RES is supplied via a drive line 213, a signal stored in the counter circuit 211 is reset.

A saturation determiner 215 that determines that the number of output signals measured by the counter circuit has been saturated is connected to the counter circuit 211. When the number of output signals measured by the counter circuit 211 reaches a saturation-determination count number, the saturation determiner 215 stops counting-up of the pulse signal using the counter circuit and stores the saturation-determination count number which is the counted value in the counter circuit 211. The saturation-determination count number can be set as a predetermined threshold value.

In the embodiment, a quotient obtained by dividing a length of the exposure time by the recharge period is referred to as a maximum recharge number. A plurality of pixels in the photoelectric converter 100 according to the embodiment include a plurality of first pixels 101a and a plurality of second pixels 101b. The number of first pixels 101a and the number of second pixels 101b are assumed, for example, to be substantially the same as described above.

The first pixels 101a are configured such that a ratio obtained by dividing the saturation-determination count number by the maximum recharge number is a first ratio, and the second pixels 101b are configured such that a ratio obtained by dividing the saturation-determination count number by the maximum recharge number is a second ratio which is smaller than the first ratio.

For this purpose, in the embodiment, the counter circuit (counter) included in the second pixels is smaller than the counter circuit (counter) included in the first pixels. Accordingly, the saturation-determination count number of the second pixels can be set to be smaller than the saturation-determination count number of the first pixels.

Alternatively, control may be performed by changing the count number used for saturation determination from the control pulse generator 115 using a signal line which is not illustrated in a state in which the counter circuits of the first pixels and the second pixels are set to have the same configuration. By employing this configuration, the saturation-determination count numbers of the first pixels and the second pixels may be changed according to the length of the exposure time or the recharge period of the corresponding pixel.

As described above, since the maximum recharge number is a value obtained by dividing the length of the exposure time by the recharge period, in one embodiment, the saturation-determination count numbers of the first pixels and the second pixels are able to be changed according to the length of the exposure time or the recharge period.

The selection circuit 212 is supplied with a control pulse SEL from the vertical scanning circuit 110 illustrated in FIG. 3 via a drive line 214 (which is not illustrated in FIG. 3) illustrated in FIG. 4 and performs switching between electrical connection and electrical disconnection between the counter circuit 211 and the signal line 113. The selection circuit 212 includes, for example, a buffer circuit for outputting a signal.

The output signal OUT illustrated in FIG. 4 is an output signal which is a pixel output, and the counted value of the counter circuit 211 is output. That is, the counter circuit 211 serves as a counter that counts and outputs the number of output signals from the avalanche photodiode until the number reaches the saturation-determination count number.

A switch such as a transistor may be provided between the switch 202 serving as a quench element and the APD 201 or between the photoelectric conversion element 102 and the signal processing circuit 103 to switch electrical connection. Similarly, supply of a voltage VH or a voltage VL supplied to the photoelectric conversion element 102 may be electrically switched using a switch such as a transistor.

A quench operation and a recharge operation using the switch 202 can be performed according to avalanche multiplication in the APD 201, but an output signal may not be determined depending on a detection timing of photons.

For example, it is assumed that avalanche multiplication occurs in an APD, an input voltage to a node nodeA becomes a low level, and the recharge operation is being performed. At that time, a determination threshold value of the waveform shaper 210 is set to a higher voltage than a voltage difference at which the avalanche multiplication occurs in the APD.

When photons are incident in a state in which the voltage of the node nodeA is a voltage which is lower than the determination threshold value and at which avalanche multiplication can occur in the APD through the recharge operation, avalanche multiplication occurs in the APD, and the voltage of the node nodeA decreases.

That is, since the voltage of the node nodeA decreases to a voltage lower than the determination threshold value, the output voltage of the node nodeB does not change even when photons are detected. Accordingly, even when avalanche multiplication occurs, determination thereof as a signal is not performed.

Particularly, under high illuminance, photons are incident consecutively in a short period and thus determination thereof as a signal is difficult. Accordingly, the output signal is likely to diverge from the number of actually incident photons even under high illuminance.

On the other hand, in the embodiment, by supplying the control signal CLK to the switch 202 to switch turning-on/off of the switch 202, determination thereof as a signal can be performed even when photons are incident on the APD consecutively for a short time.

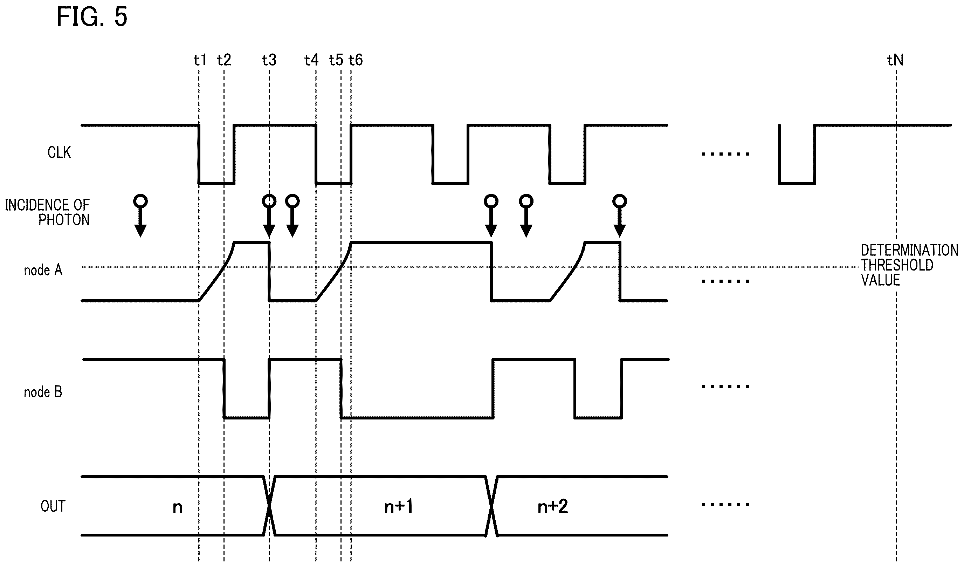

FIG. 5 is a timing chart of the photoelectric converter according to the first embodiment and schematically illustrates a relationship between the control signal CLK of the switch, the voltage of the node nodeA, the voltage of the node nodeB, and the output signal. In FIG. 5, it is assumed that the control signal CLK is a pulse signal with a constant repetition period.

In the photoelectric conversion device according to the embodiment, the drive voltage is less likely to be supplied to the APD when the control signal CLK is at a high level, and the drive voltage VH is supplied to the APD when the control signal CLK is at a low level. The high level of the control signal CLK is, for example, 1 V, and the low level of the control signal CLK is, for example, 0 V.

The switch 202 is turned off when the control signal CLK is at the high level, and the switch 202 is turned on when the control signal CLK is at the low level. The resistance value of the switch 202 when the control signal CLK is at the high level is higher than the resistance value of the switch 202 when the control signal CLK is at the low level.

When the control signal CLK is at the high level, it is difficult to perform the recharge operation even when avalanche multiplication occurs in the APD, and thus the voltage supplied to the APD is a voltage equal to or lower than the breakdown voltage of the APD. Accordingly, the avalanche multiplication operation in the APD stops.

At time t1, the control signal CLK changes from the high level to the low level, the switch 202 is turned on, and the recharge operation of the APD starts. Accordingly, the voltage of the cathode of the APD changes to the high level.

The voltage difference between the voltages supplied to the anode and the cathode of the APD can be avalanche multiplied. The voltage of the cathode is equal to that of the node nodeA. Accordingly, when the voltage of the cathode changes from the low level to the high level, the voltage of the node nodeA becomes equal to or higher than the determination threshold value at time t2.

At this time, a pulse signal output from the node nodeB is inverted and changes from the high level to the low level. When the recharge operation is completed, the APD 201 is supplied with the voltage difference corresponding to the drive voltage VH - the drive voltage VL. Thereafter, the control signal CLK changes to the high level, and the switch 202 is turned off.

Then, at time t3, when photons are incident on the APD 201, avalanche multiplication occurs in the APD 201, an avalanche current flows in the switch 202, and the voltage of the cathode drops. That is, the voltage of the node nodeA drops.

When the voltage of the node nodeA becomes lower than the determination threshold value while the voltage of the node nodeA is dropping, the voltage of the node nodeB changes from the low level to the high level. That is, a part of an output waveform in the node nodeA greater than the determination threshold value is shaped by the waveform shaper 210 and output as a signal to the node nodeB. The signal is counted by the counter circuit, and the counted value of the counter signal output from the counter circuit increases by 1 LSB.

Between time t3 and time t4, photons are incident on the APD, but since the switch 202 is turned off and the voltage supplied to the APD 201 does not reach the voltage difference at which avalanche multiplication is possible, the voltage level of the node nodeA is not higher than the determination threshold value.

At time t4, the control signal CLK changes from the high level to the low level, and the switch 202 is turned on. Accordingly, a current for complementing the voltage drop from the drive voltage VL flows in the node nodeA, and the voltage of the node nodeA changes to the original voltage level. At this time, at time t5, the voltage of the node nodeA becomes equal to or higher than the determination threshold value, and thus the pulse signal of the node nodeB is inverted and changes from the high level to the low level.

At time t6, the node nodeA is statically determinate at the original voltage level, and the control signal CLK changes from the low level to the high level. Thereafter, the voltages of the nodes, the signal lines, and the like change according to the control signal CLK or incidence of photons as described above at times t1 to t6. In this way, by supplying the control signal CLK to the switch 202 to switch turning/off of the switch 202, it is possible to control a recharge frequency of the APD.

When the control signal CLK is not used, there may be an issue in that an actual counted value is less than a counted value corresponding to luminance of incident light at high illuminance. However, by supplying the control signal CLK to the switch 202 to switch turning-on/off of the switch 202, this issue can be solved.

A period from time t1 at which the recharge operation starts to time t4 at which the next recharge operation starts corresponds to the recharge period. A length of a period (from t1 to tN in FIG. 5) in which the control signal CLK is controlled to control the recharge frequency corresponds to the length of the exposure time.

Here, when the recharge frequency of the APD is controlled by the control signal CLK and a plurality of photons are incident in one period of a pulse, a count loss occurs. Accordingly, a relationship between the number of input signals and the number of output signals is not linear.

When general stationary light is imaged, the relationship between the number of input signals and the number of output signals can be theoretically derived from a statistical distribution of the number of incident photons. Specifically, when the number of input signals is defined as Nph, the number of output signals is defined as Nct, the recharge period of the control signal CLK is defined as T, and the length of the exposure time is defined as t, Expression 1 is satisfied.

$$\mathrm{Nct} = \frac{t}{T}\left(1 - e^{-\frac{t}{T}Nph}\right) \qquad \dots (\text{Expression 1})$$

Accordingly, in the embodiment, the number of photons which are incident in one period of a pulse can be statistically predicted from the number of output signals Nct using Expression 2. Accordingly, an influence of the count loss can be recovered by a correction process in the signal processing unit 804 which will be described later. That is, correction of the nonlinearity of the number of output signals in the counter circuit can be realized by causing the signal processing unit 804 to perform the process of Expression 2.

$$\mathrm{Nph} = -\frac{t}{T} \times \ln\left(\frac{1 - Nct}{\frac{t}{T}}\right)$$

... (Expression 2)

On the other hand, in an environment in which a light source flickering in one frame, particularly, an LED light source using a drive method based on a pulse modulation system, is used as an illumination, more count losses occur in comparison with a case in which stationary light is used. Accordingly, the accuracy of the count loss correcting process decreases, and color tones in the actual environment change.

Therefore, in the embodiment, first pixels in which a ratio obtained by dividing the saturation-determination count number by the maximum recharge number is a first ratio and second pixels in which the ratio obtained by dividing the saturation-determination count number by the maximum recharge number is a second ratio which is less than the first ratio are set. Accordingly, even in the environment in which a flickering light source is used as an illumination light, it is possible to realize a photoelectric converter in which curbing of the change in color tone and curbing of halation can be made to be compatible.

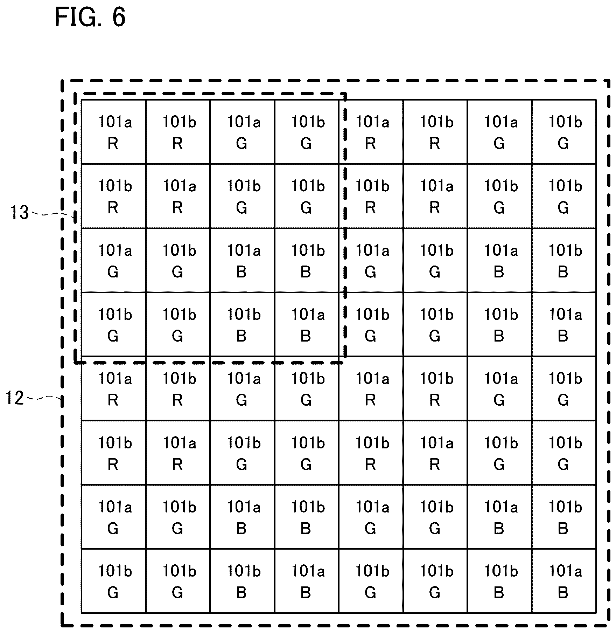

FIG. 6 is a diagram illustrating an example of pixel arrangement of first pixels 101a and second pixels 101b of the photoelectric converter 10 according to the first embodiment. Each pixel of the photoelectric converter 10 according to the embodiment includes an on-chip color filter of one color out of R (red), G (green), and B (blue), and a plurality of first pixels 101a and a plurality of second pixels 101b include pixels of all colors of R, G, and B.

That is, on-chip color filters of a plurality of color types are arranged in the plurality of first pixels, and on-chip color filters of a plurality of color types are arranged in the plurality of second pixels.

In the pixel area 12, a minimum unit including pixels of all the colors R, G, and B in the plurality of first pixels and the plurality of second pixels is referred to as a minimum pixel unit 13.

In FIG. 6, an example in which the minimum pixel unit includes 16 pixels in four rows and four columns is illustrated, and the minimum pixel unit may include 64 pixels in eight rows and eight columns or the number of rows and the number columns in the minimum pixel unit may be different from each other. The on-chip color filters may include a Y (yellow) pixel in addition to R, G, and B, and a pixel (W pixel) not including an on-chip color filter may be provided.

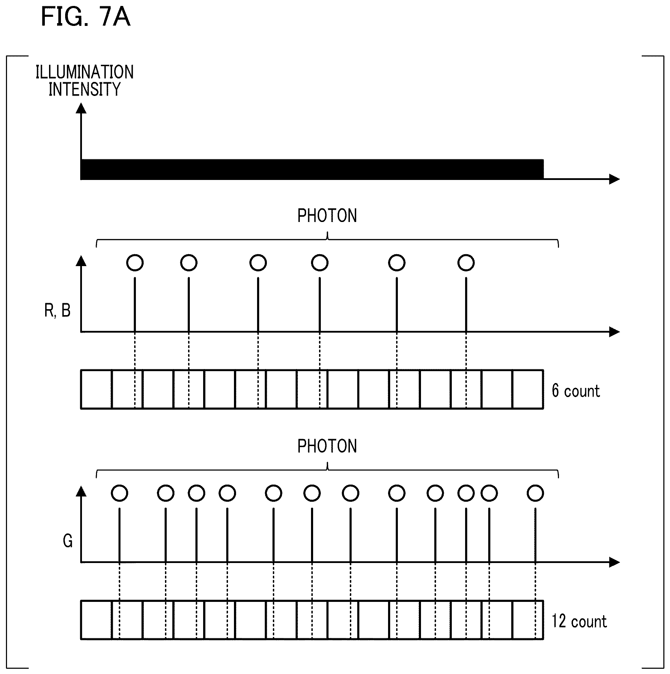

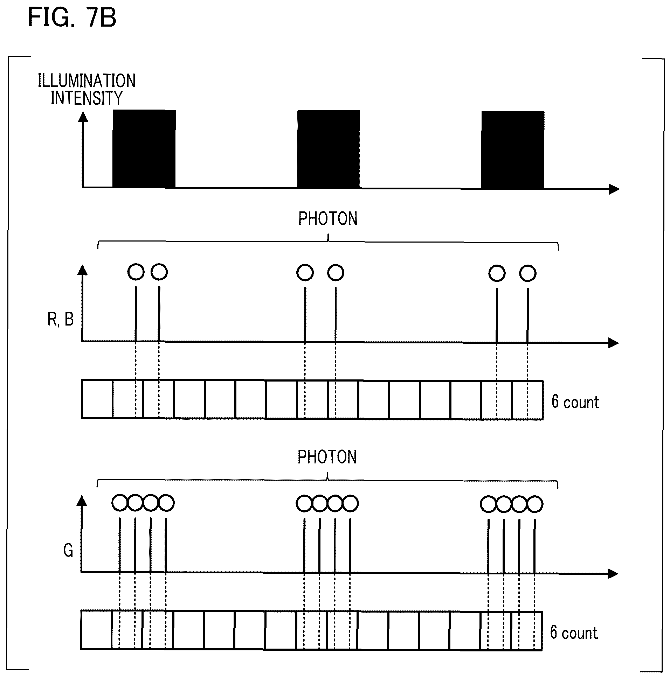

FIG. 7A is a diagram illustrating a count operation when stationary light is used as illumination. FIG. 7B is a diagram illustrating a count operation when a light source flickering with time is used as an illumination.

FIG. 7B is a diagram illustrating reasons the change in color tone occurs when a light source flickering with time and with the same averaged illumination intensity as in FIG. 7A is used as an illumination and when the photoelectric converter according to the related art is used.

In FIGS. 7A and 7B, it is assumed that the photoelectric converter includes on-chip color filters in a so-called RGB Bayer array and each pixel receives light via one filter of R, G, and B. It is assumed that white light in which the numbers of photons incident per unit time on R pixels, G pixels, and B pixels are 1:2:1 is used as an illumination. In FIGS. 7A and 7B, it is assumed that the saturation-determination count number is, for example, 12 counts.

When stationary light with a constant illumination intensity is incident as illustrated in FIG. 7A, the number of photons incident on in each recharge period for each pixels of R, G, and B is small, and thus the count losses in each recharge period are small.

On the other hand, when a flickering light source with discrete illumination intensities is used as an illumination as illustrated in FIG. 7B, photons are intensively incident in a special recharge period, and thus the count losses increase. Accordingly, when illumination light in which the numbers of photons incident per unit time on R pixels, G pixels, and B pixels are different is used, more count losses may occur in pixels of a special color.

Accordingly, the balance between the count numbers of R pixels, G pixels, and B pixels collapses, and the color tones change. For example, in the example illustrated in FIG. 7B, since more count losses occur in the G pixels, the color tone change toward magenta when the saturation-determination count number is, for example, 12 counts.

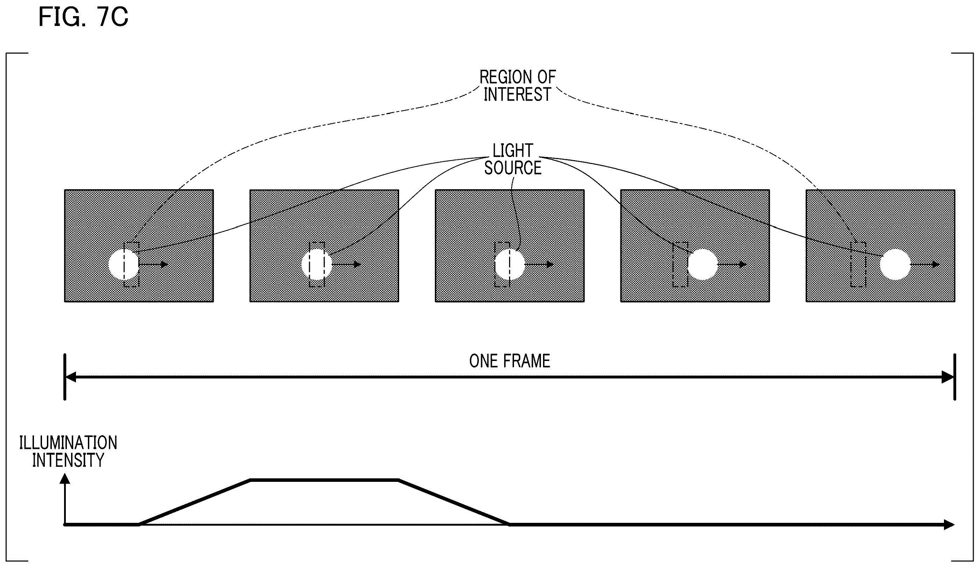

FIG. 7B illustrates an example in which a flickering light source is used as an illumination, but a count loss occurs similarly even when a moving light source is used as an illumination. FIG. 7C is a diagram illustrating an illumination intensity of a region of interest when there is a light source moving in one frame.

It can be seen from FIG. 7C that there are an instant with a strong illumination intensity and an instant with a weak illumination intensity in one frame in the region of interest. Accordingly, similarly to the case in which a flickering light source is used as an illumination, photons are intensively incident in a special recharge period, and thus the count loss increases.

On the other hand, in the photoelectric converter according to the embodiment, first pixels in which the ratio obtained by dividing the saturation-determination count number by the maximum recharge number is a first ratio and second pixels in which the ratio obtained by dividing the saturation-determination count number by the maximum recharge number is a second ratio which is less than the first ratio are provided. Accordingly, it is possible to make curbing of the change in color tone and curbing of the halation compatible.

In the following description, for example, it is assumed that the first ratio obtained by dividing the saturation-determination count number of the first pixels by the maximum recharge number is the same as the ratio obtained by dividing the saturation-determination count number of the photoelectric converter according to the related art by the maximum recharge number. At this time, the saturation-determination count number is, for example, 12 counts. In this case, photons incident on the first pixels and the counted value thereof when a flickering light source is used as an illumination are the same as illustrated in FIG. 7B.

On the other hand, the second ratio obtained by dividing the saturation-determination count number of the second pixels by the maximum recharge number is lower than the ratio obtained by dividing the saturation-determination count number of the photoelectric converter according to the related art by the maximum recharge number. That is, at least one of the saturation-determination count number and the maximum recharge number of the second pixels is different from that of the first pixels. A specific example will be described below.

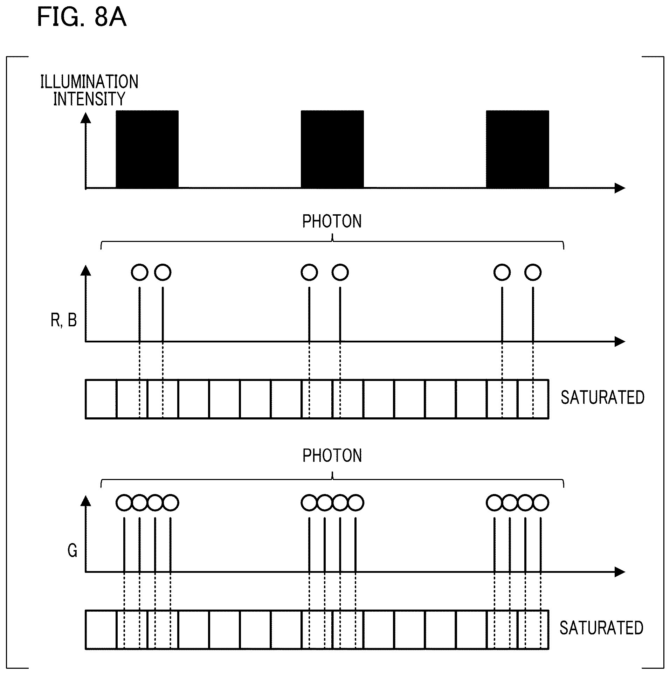

FIG. 8A is a diagram illustrating an example in which the second ratio obtained by dividing the saturation-determination count number by the maximum recharge number is set to be less than the first ratio by decreasing the saturation-determination count number. Since the recharge period in FIG. 8A is the same as in FIG. 7B, the count loss in each recharge period occurs as illustrated in FIG. 7B.

However, since the saturation-determination count number is curbed to, for example, 6 in FIG. 8A, the G pixels in which the number of count losses is relatively large and the R pixels or B pixels in which the number of count losses is relatively small is likely to saturate the count number, and thus it is possible to curb the change in color tone.

That is, for example, when the saturation-determination count number in FIG. 8A is set to 6, the color tone does not change toward magenta unlike FIG. 7B, and all of the R pixels, the G pixels, and the B pixels are saturated, that is, expressed in white.

In this way, it is possible to curb the change in color tone by decreasing the saturation-determination count number. That is, the count number acquired in the second pixels more curbs the change in color tone than that in the first pixels.

On the other hand, as can be seen from a result of comparison between FIG. 7B and FIG. 8A, when the saturation-determination count number is set to, for example, 6 counts as illustrated in FIG. 8A, the counted value acquired in the second pixels is more likely to cause halation of an image than that in the first pixels. That is, the count number acquired in the first pixels is more curbed in halation of an image than that in the second pixels.

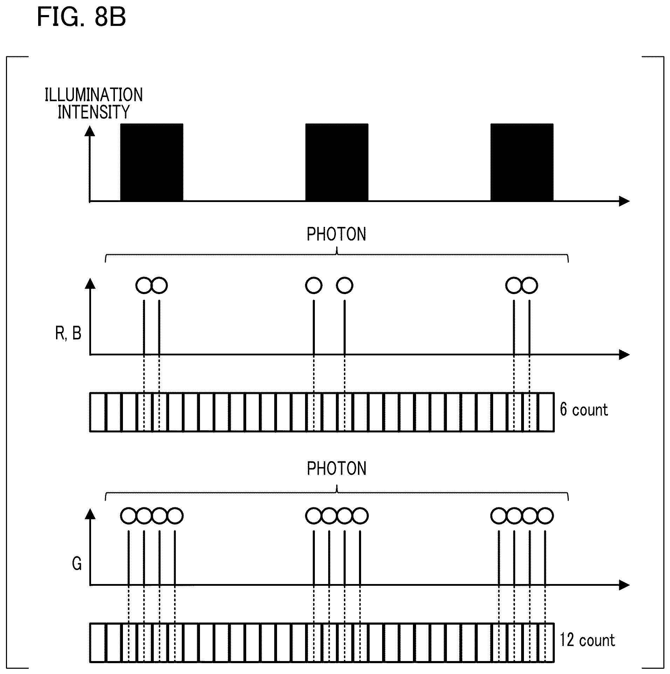

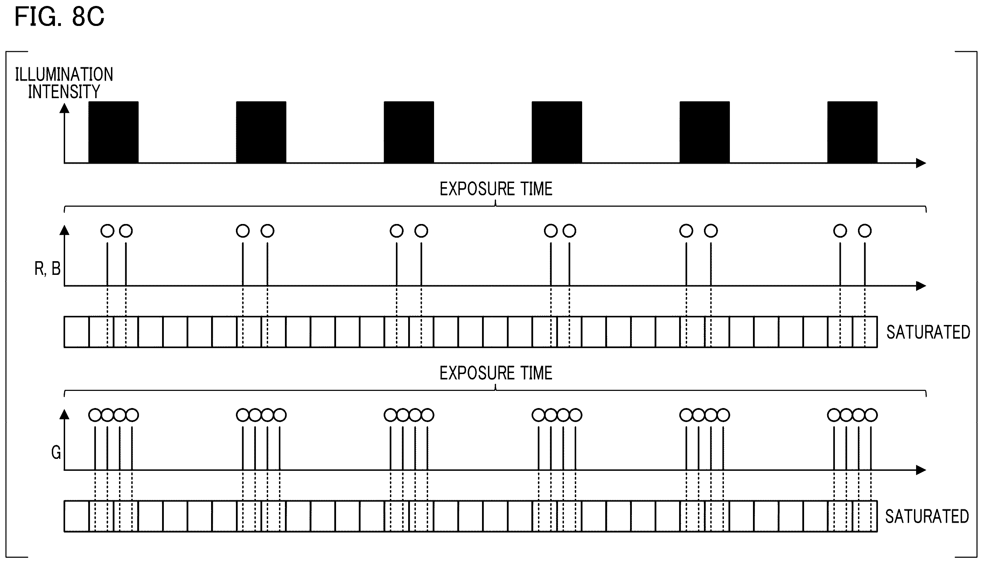

FIGS. 8B and 8C are diagrams illustrating an example in which the second ratio obtained by dividing the saturation-determination count number by the maximum recharge number is set to be less than the first ratio by increasing the maximum recharge number. That is, the maximum recharge number of the second pixels is set to be greater than the maximum recharge number of the first pixels.

In FIGS. 8B and 8C, the saturation-determination count number is set to, for example, 12 as in FIGS. 7A and 7B. Since the maximum recharge number is a value obtained by dividing the exposure time by the recharge period, the recharge period can be decreased or the exposure time can be increased in order to increase the maximum recharge number.

FIG. 8B is a diagram illustrating an example in which the second ratio obtained by dividing the saturation-determination count number by the maximum recharge number is set to be less than the first ratio by decreasing the recharge period. That is, the recharge period of the second pixels is set to be shorter than the recharge period of the first pixels.

As illustrated in FIG. 8B, since the number of photons incident in each recharge period can be decreased by shortening the recharge period, it is possible to curb the count loss. As a result, it is possible to curb the change in color tone.

That is, since the counted value of the R pixels or the B pixels is 6 and the counted value of the G pixels is 12 as illustrated in FIG. 8B, it is possible to curb the change in color tone by shortening the recharge period. That is, the count number acquired in the second pixels more curbs the change in color tone than that in the first pixels.

On the other hand, since the proportion of the count loss of the G pixels in FIG. 8B is less than that in FIG. 7B, the counted value of the G pixels is likely to increase. That is, the counted value acquired in the second pixels is more likely to cause halation of an image than that in the first pixels. That is, the count number acquired in the first pixels more curbs the halation of an image than that in the second pixels.

In FIG. 8B, the recharge period is changed by changing the frequency of the control signal CLK. That is, the recharge period of the second pixels is set to be shorter than the recharge period of the first pixels by changing the frequency of the pulse signal for controlling switching of the switch.

On the other hand, the recharge period may be changed by masking a part of the control signal CLK. That is, by masking a part of the pulse signal for controlling switching of the switch 202, the recharge period of the second pixels may be set to be shorter than the recharge period of the first pixels.

The recharge period T may be changed by normally turning on the control signal CLK, that is, by fixing the logic thereof. That is, by fixing the logic of the switch 202 in the second pixels, the recharge period of the second pixels may be set to be shorter than the recharge period of the first pixels. In this case, the recharge period T is not determined by the period (=zero) of the control signal CLK but is determined by analog characteristics of peripheral circuits of the APD.

FIG. 8C is a diagram illustrating an example in which the second ratio obtained by dividing the saturation-determination count number by the maximum recharge number is set to be less than the first ratio by increasing the exposure time. That is, in this example, the exposure time of the second pixels is set to be longer than the exposure time of the first pixels. For example, when the recharge period in FIG. 8C is set to the same as in FIG. 7B, the count loss in each recharge period occurs as illustrated in FIG. 7B.

On the other hand, since the exposure time is long, the G pixels in which the number of count losses is relatively large and the R pixels or the B pixels in which the number of count losses is relatively small are likely to increase the count number in the exposure time. That is, all of the R pixels, the G pixels, and the B pixels are likely to be saturated. Accordingly, similarly to the case in which the saturation-determination count number in FIG. 8A is decreased, the change in color tone is curbed.

As described above, it is possible to curb the change in color tone by increasing the exposure time. That is, the count number acquired in the second pixels more curbs the change in color tone than that in the first pixels.

On the other hand, as can be seen from FIG. 8C, the counted value acquired in the second pixels is more likely to cause the halation of an image than that in the first pixels. That is, the count number acquired in the first pixels more curbs the halation of an image than that in the second pixels.

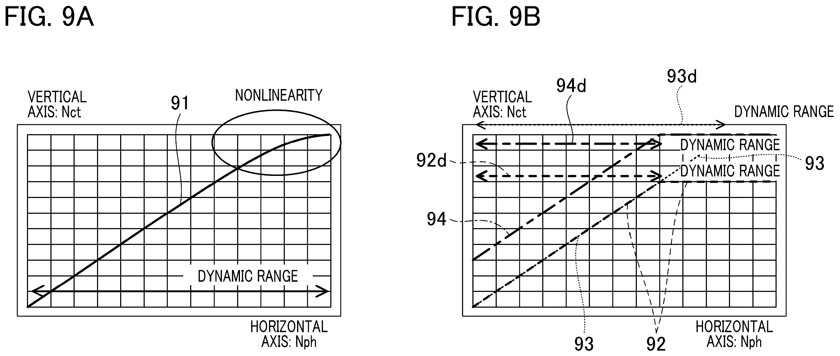

FIGS. 9A and 9B are diagrams illustrating response characteristics of the first pixels and the second pixels and illustrating a double logarithmic graph in which the horizontal axis represents Nph and the vertical axis represents Nct. A solid line 91 in FIG. 9A indicates response characteristics of the first pixels, and a broken line 92 in FIG. 9B indicates response characteristics of the second pixels when the saturation-determination count number is decreased as illustrated in FIG. 8A.

In FIG. 9B, a dotted line 93 indicates response characteristics when the recharge period is shortened as illustrated in FIG. 8B, and a chain line 94 indicates response characteristics of the second pixels when the exposure time is elongated as illustrated in FIG. 8C.

As a result of comparison between FIG. 9A and FIG. 9B, it can be seen that nonlinearity of the response characteristics in all of the broken line 92, the dotted line 93, and the chain line 94 is relaxed. That is, since the nonlinearity of the response characteristics is caused due to the count loss, it can be seen from FIGS. 9A and 9B that the change in color tone in the second pixels is more curbed than that in the first pixels.

Similarly, it can be seen from the response characteristics illustrated in FIGS. 9A and 9B that a dynamic range on the bright side in the first pixels is wider than that in the second pixels. That is, the halation in the first pixels is relatively curbed, and the change in color tone in the second pixels is relatively curbed.

As can be seen from FIG. 9B, the dynamic range in the second pixels is wider by changing the recharge period as indicated by the dotted line 93 than by decreasing the saturation-determination count number as indicated by the dotted line 92 or changing the exposure time as indicated by the chain line 94. 92d, 93d, and 94d indicate the dynamic ranges corresponding to the lines 92, 93, and 94. Accordingly, the recharge period is changed.

Here, when the recharge period is shortened, the power consumption in the APD increases. Since the power consumption in the APD is proportional to Nct, in one embodiment, change the saturation-determination count number is changed when it is intended to decrease the power consumption.

On the other hand, when the exposure time is changed (the chain line 94), the slope of Nct with respect to Nph changes (here, since FIGS. 9A and 9B are logarithmic graphs, the chain line 94 is deviated in parallel with respect to the broken line 92 or the dotted line 93. Accordingly, in one embodiment, an image with a wider dynamic range can be generated by combining the counted value of the first pixels and the counted value of the second pixels.

Specifically, the counted value acquired in the second pixels can be used for a dark subject, and the counted value acquired in the first pixels can be used for a bright subject. Two or more of the saturation-determination count number, the exposure time, and the recharge period may be combined and changed between the first pixels and the second pixels.

As described above, the change in color tone can be more curbed as the ratio obtained by dividing the saturation-determination count number by the maximum recharge number becomes smaller, and the halation can be more curbed as the ratio obtained by dividing the saturation-determination count number by the maximum recharge number becomes larger.

Accordingly, in one embodiment, the change in color tone and the halation can be compatibly curbed as a difference between the first ratio obtained by dividing the saturation-determination count number of the first pixels by the maximum recharge number and the second ratio obtained by dividing the saturation-determination count number of the second pixels by the maximum recharge number becomes larger. Specifically, in one embodiment, the second ratio equal to or less than half the first ratio. In another embodiment, the second ratio equals to or less than 1/8 times the first ratio.

As described above, with the photoelectric converter according to the first embodiment, it is possible to acquire a signal with curbed halation using the first pixels and to acquire a signal with curbed change in color tone using the second pixels in an environment in which a flickering light source is used as an illumination.

<Second embodiment>

With the configuration according to the aforementioned embodiment, it is possible to determine a degree of change in color tone due to a flickering light source by comparing the counted values of a first pixel and a second pixel which neighbor each other.

Therefore, a photoelectric converter (photoelectric conversion device) according to a second embodiment includes a determiner that determines a degree of change in color tone occurring by comparing the counted values of a first pixel and a second pixel which neighbor each other in addition to the photoelectric converter according to the first embodiment.

The determiner may be provided inside of the photoelectric converter, specifically, in the circuit board 21 or may be provided outside of the photoelectric converter and may be constituted by a computer program or a dedicated circuit such as a signal processing unit 804 which will be described later, a processor, or the like. The determiner and the photoelectric converter may not be provided in the same housing and may be constituted by individual devices connected to each other via a signal line.

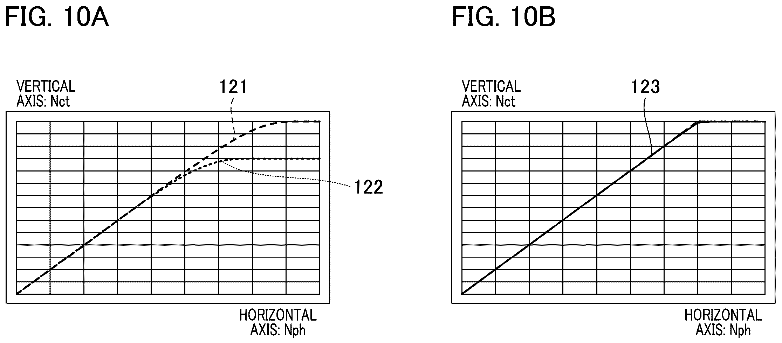

FIG. 10A is a diagram illustrating an example of response characteristics of first pixels. A broken line 121 indicates response characteristics when stationary light is used as illumination light, and a dotted line 122 indicates response characteristics when a flickering light source is used as an illumination. FIG. 10(B) is a diagram illustrating response characteristics of second pixels.

A solid line 123 in FIG. 10B indicates response characteristics when stationary light is used as illumination light and when a flickering light source is used as an illumination, where both almost overlap each other. In FIGS. 10A and 10B, for example, it is assumed that the recharge periods of the first pixels and the second pixels are changed.

The response characteristics of the first pixels and the second pixels when stationary light is used as illumination light correspond to Expression 1, and an output when the number of incident photons is large decreases due to the count loss when a flickering light source is used as an illumination.

As described above, since the second pixels are less affected by the count loss, the decrease in output when a flickering light source is used as an illumination is small as illustrated in FIG. 10B. On the other hand, since the first pixels are more affected by the count loss, the decrease in output when a flickering light source is used as an illumination is large as illustrated in FIG. 10A.

Accordingly, when a third ratio NR, which is calculated by Expression 3, of the number of incident photons calculated from an output value of the first pixels to the number of incident photons calculated from an output value of the second pixels is close to 1, it can be seen that stationary light is used as illumination light. The third ratio NR can also be referred to as a ratio of the output value of the first pixels to the output value of the second pixels.

When the third ration NR calculated by Expression 3 is less than 1, it can be seen that a flickering light source is used as an illumination. That is, it is possible to determine the change in color tone on the basis of the ratio of the number of incident photons calculated from the output value of the first pixels to the number of incident photons calculated from the output value of the second pixels. In Expression 3, T1 denotes the recharge period of the first pixels, and T2 denotes the recharge period of the second pixels.

$$NR = \frac{T_2 \times \ln\left(\dfrac{1 - Nct}{\frac{t}{T_1}}\right)}{T_1 \times \ln\left(\dfrac{1 - Nct}{\frac{t}{T_2}}\right)} \qquad \dots \text{(Expression 3)}$$

The third ratio NR may be calculated for each minimum pixel unit, or one third ratio NR may be calculated for a plurality of pixel units. As illustrated in FIG. 6, when a plurality of first pixels and a plurality of second pixels are included in the minimum pixel unit or when one third ratio NR is calculated for a plurality of pixel units, Expression 3 can be calculated using an average value or a median value of the plurality of first pixels and the plurality of second pixels.

As illustrated in FIG. 6, when the photoelectric converter 100 includes pixels including on-chip color filters of a plurality of color types, in one embodiment, the third ratio NR for each color is calculated. A degree of count loss occurring in the output value of the pixels of each color can be calculated from the third ratio NR for the corresponding color.

Accordingly, by calculating the third ratio NR for each color and calculating a difference between the third ratios for the colors, it is possible to determine the change in color tone with higher accuracy when Expression 3 is simply used. Specifically, a third ratio NR_R of the R pixels, a third ratio NR_G of the G pixels, and the third ratio NR_B of the B pixels may be calculated, and NR_R/NR_G and NR_B/NR_G may be calculated.

In this way, by calculating the third ratio of the number of incident photons calculated from the output value of the first pixels to the number of incident photons calculated from the output value of the second pixels for each color, it is preferable to accurately determine the change in color tone.

In one embodiment, the number of first pixels and the number of second pixels in the minimum pixel unit is set to the same. Specifically, a ratio of the number of second pixels is set to the number of first pixels in the minimum pixel unit to be equal to or greater than 1/2 and equal to or less than 2.

By employing this configuration, a plurality of second pixels are arranged around a first pixel and a plurality of first pixels are arranged around a second pixel, and thus the determination accuracy of the change in color tone is improved. Particularly, in one embodiment, the first pixels and the second pixels are arranged in a zigzag as illustrated in FIG. 6.

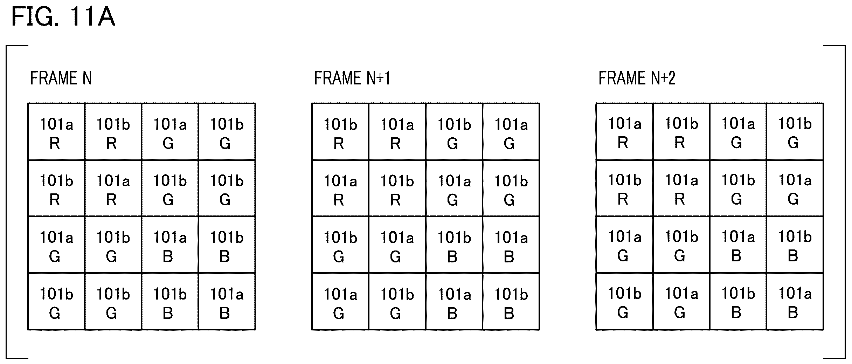

FIG. 11A is a diagram illustrating an example in which the first pixels and the second pixels are exchanged in position for each frame. By employing this configuration, in one embodiment, the determination accuracy of the change in color tone can be further improved.

That is, in FIG. 11A, at least one of the saturation-determination count number, the exposure time, and the recharge period of each pixel is change for each frame. Accordingly, it is possible to exchange the positions of the first pixels and the second pixels for each frame and to improve the determination accuracy of the change in color tone while reducing an influence of a pattern of a subject.

<Third embodiment>

A photoelectric converter (photoelectric conversion device) according to a third embodiment includes a combination processor configured to combine output values of first pixels and second pixels to generate a combined image in which the halation and the change in color tone are curbed according to a determination result from the determiner according to the second embodiment.

The combination processor may be provided inside of the photoelectric converter, specifically, in the circuit board 21 or may be constituted by the photoelectric converter and a computer program or a dedicated circuit such as a signal processing unit 804 which will be described later, a processor, or the like. The determiner and the photoelectric converter may not be provided in the same housing and may be constituted by individual devices connected to each other via a signal line.

When it is intended to generate an image in which the halation and the change in color tone are curbed using determination information, for example, control can be performed as follows. That is, the output value of the first pixels is used for a pixel unit in which stationary light is used as illumination light and it is important to curb the halation, and the output value of the second pixels is used for a pixel unit in which a flickering light source is used as an illumination and it is important to curb the change in color tone.

That is, the output value of the first pixels can be used when the third ratio NR is equal to or greater than a predetermined threshold value, and the output value of the second pixels can be used when the third ratio NR is less than the predetermined threshold value. That is, the output value of the first pixels is used when the third ratio of the number of incident photons calculated from the output value of the first pixels to the number of incident photons calculated from the output value of the second pixels is equal to or greater than the predetermined threshold value, and the output value of the second pixels is used when the third ratio is less than the predetermined threshold value. As a result, a combined image is generated.

As described above, for example, since it can be determined that a flickering light source is used as an illumination when the third ratio NR is less than 1, for example, 1 can be used as the predetermined threshold value. In one embodiment, the predetermined threshold value is set to be equal to or greater than 1/2 due to an error at the time of calculation of the third ratio NR.

When a combination process is performed, it is possible to further curb an error of the third ratio NR due to optical shot noise or the like and to further improve the determination accuracy of determining a degree of change in color tone as the number of pixels in which the third ratio NR is calculated becomes larger.

On the other hand, when both a stationary light source and a flickering light source are used as an illumination, it is possible to select which of the output value of the first pixels and the output value of the second pixels is to use for each finer pixel unit better as the number of pixels in which the third ratio NR is calculated is small. As a result, in one embodiment, it is possible to improve the effect of curbing the halation and curbing the change in color tone.

As described above, the number of output signals (a counted value) Nct of pixels and the number of photons Nph incident on the pixels are different, and the response characteristics thereof is determined by the ration obtained by dividing the saturation-determination count number by the maximum recharge number. Accordingly, in one embodiment, the combination process is performed using a value obtained by the correction process of Expression 2 on the output value of the first pixels and the output value of the second pixels.

Specifically, a correction process based on Expression 4 can be performed on the output value of the first pixels, and a correction process based on Expression 5 can be performed on the output value of the second pixels. In other words, in one embodiment, the combined image is generated after the combination processor has performed different nonlinearity correction processes on the output value of the first pixels and the output value of the second pixels.

$$\mathrm{Nph} = -\frac{t}{T_1} \times \ln\left(\frac{1 - Nct}{\frac{t}{T_1}}\right)$$

$$\dots \text{(Expression 4)}$$

$$\mathrm{Nph} = -\frac{t}{T_2} \times \ln\left(\frac{1 - Nct}{\frac{t}{T_2}}\right)$$

$$\dots \text{(Expression 5)}$$

<Fourth embodiment>

In a fourth embodiment, for example, a drive condition appropriate for illumination light is selected by changing at least one of the saturation-determination count number, the exposure time, and the recharge period of a next frame in which determination information has been acquired according to the determination result from the determiner according to the second embodiment.

That is, a photoelectric converter (photoelectric conversion device) according to the fourth embodiment includes a selector configured to select a drive condition of a next frame in which determination information has been acquired according to the determination result from the determiner in addition to the photoelectric converter according to the second embodiment.

The selector may be provided inside of the photoelectric converter, specifically, in the circuit board 21 or may be constituted by the photoelectric converter and a computer program including the determiner or a dedicated circuit such as a signal processing unit 804 which will be described later, a processor, or the like. The determiner and the photoelectric converter may not be provided in the same housing and may be constituted by individual devices connected to each other via a signal line.

Since it is important to curb the halation in a pixel unit in which it is known from the determination information that stationary light is used as illumination light, the drive condition of the first pixels of the frame in which the determination information has been acquired is used for both of the first pixels and the second pixels.

On the other hand, since it is important to curb the change in color tone in a pixel unit in which it is known from the determination information that a flickering light source is used as an illumination, the drive condition of the second pixels of the frame in which the determination information has been acquired is used for both of the first pixels and the second pixels.

That is, when the third ratio NR is equal to or greater than a predetermined threshold value (for example, 1/2), the drive condition of the first pixels of the frame in which the determination information has been acquired is used for both of the first pixels and the second pixels in a next frame. The third ratio is a ratio of the number of incident photons calculated from the output value of the first pixels to the number of incident photons calculated from the output value of the second pixels as described above.

On the other hand, when the third ratio NR is less than the predetermined threshold value (for example, 1/2), the drive condition of the second pixels of the frame in which the determination information has been acquired is used for both of the first pixels and the second pixels in a next frame. In one embodiment, the predetermined threshold value is set to 1/2 to 1. In other words, the predetermined threshold value is set to be equal to or greater than 1/2 due to an error at the time of calculation of the third ratio NR.

Instead of changing the drive condition of a next frame in which determination information has been acquired for each pixel unit, the same drive condition may be used for all the pixels. Specifically, for example, when it is known from the determination information of a pixel unit including a majority of pixels that stationary light is used, in one embodiment, the drive condition of the first pixels of the frame in which the determination information has been acquired for all the pixels is used.

On the other hand, for example, when it is known from the determination information of a pixel unit including a majority of pixels that flickering illumination light is used, in one embodiment, the drive condition of the second pixels of the frame in which the determination information has been acquired for all the pixels is used.

In other words, the drive condition for all the pixels of a next frame in which the determination information has been acquired is used, for example, based on the determination result from a majority of pixels. Here, the determination information is not limited to acquisition from a majority of pixels. For example, the determination information may be acquired from pixels more than 3/4 of the pixels.

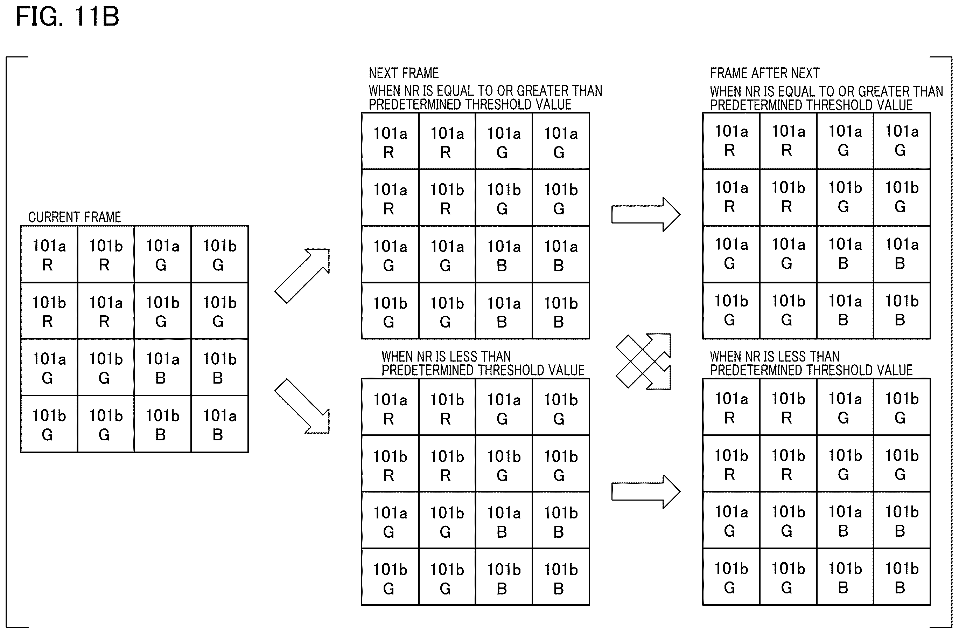

At this time, when the same drive condition is set for all the pixels, the determination result of the change in color tone in the corresponding frame is not acquired. Accordingly, for example, as illustrated in FIG. 11B, in one embodiment, a drive condition is used, which is different from that of a large number of other pixels, in a small number of pixels.

FIG. 11B is a diagram illustrating an example in which a drive condition different from that of a large number of other pixels is used in a small number of pixels. Specifically, as illustrated in FIG. 11B, a ratio of the number of pixels in which the drive condition of the first pixels is used to the number of pixels in which the drive condition of the second pixels is used is set to be, for example, equal to or less than 1/4 or, for example, equal to or greater than 4.

As can be seen from FIGS. 9A and 9B, the halation is further curbed as the ratio obtained by dividing the saturation-determination count number by the maximum recharge number becomes larger, and the change in color tone is further curbed as the ratio obtained by dividing the saturation-determination count number by the maximum recharge number becomes smaller. Accordingly, other drive conditions other than the drive condition of the first pixels and the drive condition of the second pixels in the frame in which determination information has been acquired may be selected as the drive conditions of a next frame.

For example, when it is assumed that the whole illumination intensity of a flickering light source is constant, illumination light at an instant at which the light source is turned on becomes stronger as the turn-on time of the flickering light source becomes shorter. Accordingly, a count loss is more likely to occur, and the change in color tone increases.

Accordingly, when it is known from the determination information that the change in color tone is large, in one embodiment, the ratio obtained by dividing the saturation-determination count number by the maximum recharge number in a next frame is set to be less than that of the second pixels in the frame in which the determination information has been acquired.

When it is known from the determination information that the change in color tone is small, in one embodiment, the ratio obtained by dividing the saturation-determination count number by the maximum recharge number in a next frame is set to be, for example, in the middle between the ratio of the first pixels and the ratio of the second pixels in the frame in which the determination information has been acquired.

<Fifth embodiment>

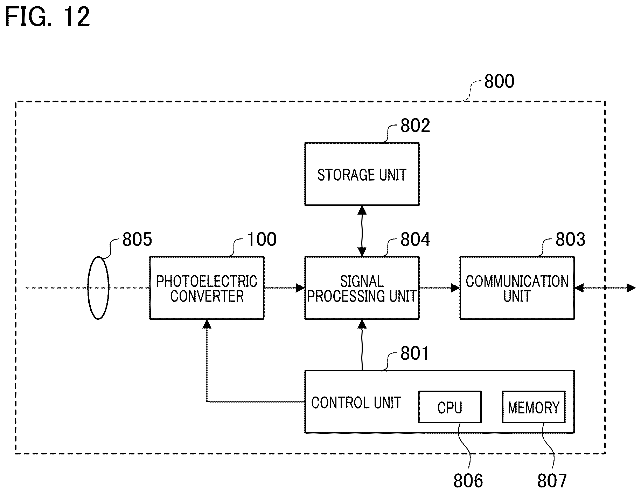

FIG. 12 is a functional block diagram illustrating an example of a configuration of a photoelectric conversion device using the photoelectric converter according to the first to fourth embodiments. Some of the functional blocks illustrated in FIG. 12 are realized by causing a CPU or the like which is a computer included in the photoelectric conversion device to execute a computer program stored in a memory which is a storage medium.

However, some or all of the functional blocks may be realized by hardware. A dedicated circuit (ASIC), a process (a reconfigurable processor or a DSP), or the like can be used as the hardware. The functional blocks illustrated in FIG. 12 may not be incorporated into the same housing and may be constituted by different devices connected to each other via a signal line.

A photoelectric conversion device 800 includes a photoelectric converter 100, a control unit 801, a storage unit 802, a communication unit 803, a signal processing unit 804, and an image-forming optical system 805. The photoelectric converter 100 captures an optical image which is formed by the image-forming optical system 805. A signal read from the photoelectric converter 100 is supplied to the signal processing unit 804.

The signal processing unit 804 performs processing such as black level correction, gamma curve adjustment, noise reduction, data compression, white balance correction, or color conversion. A part of the signal processing unit 804 or the like may be included in the signal processing circuit 103, or a part of the signal processing circuit 103 may be included in the signal processing unit 804 or the like.

The signal processing unit 804 corrects the nonlinearity of the number of output signals Nct of the counter circuit 211 using Expression 2. As a result, a final image is generated. With this configuration, it is possible to realize a photoelectric converter that can curb the change in color tone even in an environment in which a flickering light source is used as an illumination.

A CPU 806 which is a computer is incorporated into the control unit 801, and thus the control unit serves as a control means for controlling operations of the constituents of the whole photoelectric conversion device 800 on the basis of a computer program stored in a memory 807 which is a storage medium.

The control unit 801 controls the length of the exposure time of each frame of the photoelectric converter 100, timings of the control signal CLK, and the like via the control pulse generator 115 of the photoelectric converter 100.

The control unit 801 controls the exposure time of the avalanche photodiode and controls the recharge period of the avalanche photodiode. The control unit 801 performs control such that a first pixel in which the ratio of the saturation-determination count number to the maximum recharge number is a first ratio and a second pixel in which the ratio of the saturation-determination count number to the maximum recharge number is a second ratio less than the first ratio are set as described above.

The control unit 801 may determine a degree of change in color tone due to a flickering light source by comparing the counted values of the first pixels and the second pixels which neighbor each other. In this case, the control unit 801 serves a determiner configured to perform this determination.

The control unit 801 or the signal processing unit 804 may serve as the combination processor configured to combine the output values of the first pixels and the second pixels to generate a combined image in which the halation and the change in color tone are both curbed according to the determination result.

The control unit 801 may perform control such that a drive condition appropriate for illumination light is selected by changing at least one of the saturation-determination count number, the exposure time, and the recharge period of a next frame in which determination information based on the determination result has been acquired.

The storage unit 802 includes, for example, a recording medium such as a memory car or a hard disk. The communication unit 803 includes a wireless or wired interface, outputs the generated image to the outside of the photoelectric conversion device 800, and receives a signal from the outside.

As described above, according to the disclosure, it is possible to realize a photoelectric converter that can curb the change in color tone even in an environment in which a flickering light source, a light source moving in one frame, or the like is used as an illumination.

While the disclosure has been described with reference to embodiments, it is to be understood that the disclosure is not limited to the disclosed embodiments. The scope of the following claims is to be accorded the broadest interpretation so as to encompass all such modifications and equivalent structures and functions.

In addition, as a part or the whole of the control according to the embodiments, a computer program realizing the function of the embodiments described above may be supplied to the photoelectric conversion device or the like through a network or various storage media. Then, a computer (or a CPU, an MPU, or the like) of the photoelectric conversion device or the like may be configured to read and execute the program. In such a case, the program and the storage medium storing the program configure the invention.

In addition, the disclosure includes those realized using at least one processor or circuit configured to perform functions of the embodiments explained above. For example, a plurality of processors may be used for distribution processing to perform functions of the embodiments explained above.

This application claims the benefit of Japanese Patent Application No. 2024-225143, filed on December 20, 2024, which is hereby incorporated by reference herein in its entirety.

**Claims**

1. A conversion device comprising:

   a photodiode;
   a counter configured to count and output the number of output signals from the photodiodes until a number of output signals reaches a count number;
   at least one processor; and
   a memory coupled to the at least one processor, the memory storing instructions that, when executed by the at least one processor, cause the at least one processor to perform:
   controlling an exposure time of the photodiode and a recharge period of the photodiode such that a first pixel in which a ratio of the count number to a maximum recharge number determined as a quotient obtained by dividing the exposure time by the recharge period is a first ratio and a second pixel in which the ratio of the count number to the maximum recharge number is a second ratio smaller than the first ratio are set.

2. The conversion device according to claim 1, wherein the count number of the second pixel is smaller than the count number of the first pixel.

3. The conversion device according to any one of claims 1 or 2, wherein the maximum recharge number of the second pixel is larger than the maximum recharge number of the first pixel.

4. The conversion device according to claim 3, wherein the recharge period of the second pixel is shorter than the recharge period of the first pixel.

5. The conversion device according to any one of claims 1 to 4, further comprising a switch connected to one of an anode and a cathode of the photodiode and a power supply line for supplying a drive voltage and configured to control the recharge period by switching a resistance value between the one node and the power supply line.

6. The conversion device according to claim 5, wherein the at least one processor further performs:
   setting the recharge period of the second pixel to be shorter than the recharge period of the first pixel by changing a frequency of a pulse signal for controlling switching of the switch.

7. The conversion device according to any one of claims 1 to 6, wherein the exposure time of the second pixel is longer than the exposure time of the first pixel.

8. The conversion device according to any one of claims 1 to 7, wherein the at least one processor further performs: determining a degree of change in color tone by comparing counted values between the first pixel and the second pixel.

9. The conversion device according to any one of claims 1 to 8, wherein the change in color tone is determined based on a ratio of a number of incident photons calculated from an output value of the first pixel to the number of incident photons calculated from an output value of the second pixel.

10. The conversion device according to claim 8, wherein the at least one processor further performs: combining output values of the first pixel and the second pixel based on a determination result from a determiner to generate a combined image in which halation and change in color tone have been curbed.

11. The conversion device according to claim 10, wherein the combined image is generated using the output value of the first pixel when a third ratio of the number of incident photons calculated from the output value of the first pixel to the number of incident photons calculated from the output value of the second pixel is equal to or greater than a predetermined threshold value and using the output value of the second pixel when the third ratio is less than the predetermined threshold value.

12. The conversion device according to any one of claims 8 to 11, wherein the at least one processor further performs: selecting a drive condition for a next frame base on a determination result from a determiner.

13. The conversion device according to any one of claims 1 to 12, wherein each pixel includes an on-chip color filter.

14. The conversion device according to claim 13, wherein the on-chip color filters of a plurality of colors are provided in the plurality of first pixels, and the on-chip color filters of a plurality of colors are provided in the plurality of second pixels.

15. The conversion device according to claim 13 or 14, wherein the change in color tone is determined by calculating a ratio of the number of incident photons calculated from the output value of the first pixel to the number of incident photons calculated from the output value of the second pixel for each color.

FIG. 1

FIG. 2

FIG. 3

FIG. 4

FIG. 5

CLK

INCIDENCE OF
PHOTON

node A

DETERMINATION
THRESHOLD
VALUE

node B

OUT

n

n+1

n+2

t1 t2  t3  t4 t5 t6                                    tN

## FIG. 6

## FIG. 7A

ILLUMINATION
INTENSITY

PHOTON

R, B

6 count

PHOTON

G

12 count

FIG. 7B

# FIG. 7C

REGION OF
INTEREST

LIGHT
SOURCE

ONE FRAME

ILLUMINATION
INTENSITY

EP 4 765 853 A1

FIG. 8A

ILLUMINATION
INTENSITY

PHOTON

R, B

SATURATED

PHOTON

G

SATURATED

FIG. 8B

# FIG. 8C

ILLUMINATION INTENSITY

EXPOSURE TIME

R, B

SATURATED

EXPOSURE TIME

G

SATURATED

EP 4 765 853 A1

## FIG. 9A

VERTICAL
AXIS: Nct

91

NONLINEARITY

DYNAMIC RANGE

HORIZONTAL
AXIS: Nph

## FIG. 9B

VERTICAL
AXIS: Nct

94d

93d

DYNAMIC RANGE

DYNAMIC RANGE

92d

DYNAMIC RANGE

93

94

93

92

HORIZONTAL
AXIS: Nph

EP 4 765 853 A1

FIG. 10A

VERTICAL
AXIS: Nct

121

122

HORIZONTAL
AXIS: Nph

FIG. 10B

VERTICAL
AXIS: Nct

123

HORIZONTAL
AXIS: Nph

EP 4 765 853 A1

# FIG. 11A

FRAME N

| 101a R | 101b R | 101a G | 101b G |
|--------|--------|--------|--------|
| 101b R | 101a R | 101b G | 101b G |
| 101a G | 101b G | 101a B | 101b B |
| 101b G | 101b G | 101b B | 101a B |

FRAME N+1

| 101b R | 101a R | 101b G | 101a G |
|--------|--------|--------|--------|
| 101a R | 101b R | 101a G | 101b G |
| 101b G | 101a G | 101b B | 101a B |
| 101a G | 101b G | 101a B | 101b B |

FRAME N+2

| 101a R | 101b R | 101a G | 101b G |
|--------|--------|--------|--------|
| 101b R | 101a R | 101b G | 101a G |
| 101a G | 101b G | 101a B | 101b B |
| 101b G | 101a G | 101b B | 101a B |

EP 4 765 853 A1

# FIG. 11B

**CURRENT FRAME**

| | | | |
|---|---|---|---|
| 101a R | 101b R | 101a G | 101b G |
| 101b R | 101a R | 101b G | 101b G |
| 101a G | 101b G | 101a B | 101b B |
| 101b G | 101b G | 101b B | 101a B |

**NEXT FRAME**
WHEN NR IS EQUAL TO OR GREATER THAN PREDETERMINED THRESHOLD VALUE

| | | | |
|---|---|---|---|
| 101a R | 101a R | 101a G | 101a G |
| 101a R | 101b R | 101b G | 101b G |
| 101a G | 101a G | 101a B | 101a B |
| 101b G | 101b G | 101a B | 101b B |

WHEN NR IS LESS THAN PREDETERMINED THRESHOLD VALUE

| | | | |
|---|---|---|---|
| 101a R | 101b R | 101a G | 101b G |
| 101b R | 101b R | 101b G | 101b G |
| 101a G | 101b G | 101a B | 101b B |
| 101b G | 101b G | 101b B | 101b B |

**FRAME AFTER NEXT**
WHEN NR IS EQUAL TO OR GREATER THAN PREDETERMINED THRESHOLD VALUE

| | | | |
|---|---|---|---|
| 101a R | 101a R | 101a G | 101a G |
| 101a R | 101b R | 101b G | 101b G |
| 101a G | 101a G | 101a B | 101a B |
| 101b G | 101b G | 101a B | 101b B |

WHEN NR IS LESS THAN PREDETERMINED THRESHOLD VALUE

| | | | |
|---|---|---|---|
| 101a R | 101b R | 101a G | 101b G |
| 101b R | 101b R | 101b G | 101b G |
| 101a G | 101b G | 101a B | 101b B |
| 101b G | 101b G | 101b B | 101b B |

FIG. 12

┌─────────────────────────────────────────────────────────── 800
│
│                              ┌──────────────┐ 802
│                              │ STORAGE UNIT │
│                              └──────────────┘
│                                     ↕
│    805        100          804                    803
│     ⬭    ┌──────────────┐  ┌──────────────┐  ┌──────────────┐
│ ─ ─ ─    │ PHOTOELECTRIC│→ │    SIGNAL    │→ │COMMUNICATION │ ↔ →
│          │  CONVERTER   │  │PROCESSING UNIT│  │     UNIT     │
│          └──────────────┘  └──────────────┘  └──────────────┘
│                 ↑                 ↑
│                 │          801
│                 │   ┌──────────────────────────────────┐
│                 └───│ CONTROL UNIT   ┌─────┐  ┌────────┐│
│                     │                │ CPU │  │ MEMORY ││
│                     │                └─────┘  └────────┘│
│                     └──────────────────────────────────┘
│                                       │          │
└───────────────────────────────────────┼──────────┼───────
                                        806        807

# EUROPEAN SEARCH REPORT

**Application Number**

EP 25 22 4886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/370741 A1 (TOJIMA KENZO [JP]) 16 November 2023 (2023-11-16) | 1,3-6, 13,14 | INV. H04N25/534 |
| Y | * paragraphs [0044], [0057], [0061], | 7 | H04N25/773 |
| A | [0086], [0092], [0199], [0207]; figures 6-8 * | 2,8-12, 15 | H04N23/745 |
| | ----- | | |
| Y | US 2023/343879 A1 (OTA YASUHARU [JP] ET AL) 26 October 2023 (2023-10-26) * paragraphs [0081], [0099], [0109]; figures 6,7,9 * | 7 | |
| | ----- | | |
| A | US 2023/071218 A1 (OTA YASUHARU [JP] ET AL) 9 March 2023 (2023-03-09) * paragraph [0148] - paragraph [0159]; figures 15a-15e * | 1-15 | |
| | ----- | | |

**TECHNICAL FIELDS SEARCHED (IPC)**

H04N

The present search report has been drawn up for all claims

| Place of search | Date of completion of the search | Examiner |
|---|---|---|
| Munich | 31 March 2026 | Penchev, Petyo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 4886

This annex lists the patent family members relating to the patent documents cited in  the above-mentioned European search report.
The members are as contained in the European Patent Office EDP file on
The European Patent Office is in no way liable for these particulars which are merely given for the purpose of information.

31-03-2026

| Patent document cited in search report | | Publication date | Patent family member(s) | | Publication date |
|---|---|---|---|---|---|
| US 2023370741 | A1 | 16-11-2023 | JP | 2023168794 A | 29-11-2023 |
| | | | US | 2023370741 A1 | 16-11-2023 |
| US 2023343879 | A1 | 26-10-2023 | EP | 4277263 A1 | 15-11-2023 |
| | | | JP | 7661212 B2 | 14-04-2025 |
| | | | JP | 2022106660 A | 20-07-2022 |
| | | | JP | 2025092560 A | 19-06-2025 |
| | | | KR | 20230128061 A | 01-09-2023 |
| | | | US | 2023343879 A1 | 26-10-2023 |
| | | | WO | 2022149576 A1 | 14-07-2022 |
| US 2023071218 | A1 | 09-03-2023 | CN | 115802182 A | 14-03-2023 |
| | | | DE | 102022122515 A1 | 09-03-2023 |
| | | | KR | 20230036971 A | 15-03-2023 |
| | | | TW | 202312679 A | 16-03-2023 |
| | | | US | 2023071218 A1 | 09-03-2023 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020123847 A

- JP 2024225143 A